# EUROPÄISCHE PATENTANMELDUNG

(11) **EP 4 383 521 A1**
(43) Veröffentlichungstag der Anmeldung: **12.06.2024**
(21) Anmeldenummer: 23212427.1
(22) Anmeldetag: 27.11.2023
(51) Int. Cl.: H02K 1/276, H02K 1/28, H02K 1/32

(54) **ROTOR MIT STANZPAKETIERTEM, SPALTFREIEN LAMELLENPAKET**

(30) Priorität: 08.12.2022 DE 102022213295
(71) Anmelder: Volkswagen Aktiengesellschaft, 38440 Wolfsburg (DE)
(72) Erfinder: Prokoph, Stefan, 34295 Edermünde (DE); Pieper, Sven, 33178 Borchen (DE); Bachmann, Tim, 34308 Bad Emstal (DE); Grützner, Stefan, 34281 Gudensberg (DE)

(57) **Zusammenfassung**

Die Erfindung betrifft einen Rotor (1) für eine Elektromaschine (2) für ein Antriebssystem (3) für ein Kraftfahrzeug (4). Der Rotor (1) weist ein Lamellenpaket (7) aus einer Mehrzahl von Lamellenteilpaketen (8) mit jeweils mehreren mittleren Rotorlamellen (12), die zwischen einer ersten Rotorlamelle (10) und einer zweiten Rotorlamelle (11) angeordnet und miteinander sowie mit diesen durch Stanzpaketieren verbunden sind, auf. Stirnseiten (S) der zweiten Rotorlamellen (11) weisen jeweils eine sich in axialer Richtung (A) erstreckende Erhebung (13) auf. In der Stirnseite (S) der ersten Rotorlamelle (10) und/oder der Stirnseite (S) der zweiten Rotorlamelle (11) ist ein Aufnahmebereich (14) ausgebildet, wobei die Erhebung (13) eines direkt benachbarten Lamellenteilpakets (8) vollständig in dem Aufnahmebereich (14) angeordnet ist. Ferner betrifft die Erfindung eine Elektromaschine (2) für ein Antriebssystem (3) für ein Kraftfahrzeug (4) sowie ein Kraftfahrzeug (4) mit einem Antriebssystem (3).

## Beschreibung

Die vorliegende Erfindung betrifft einen Rotor für eine Elektromaschine für ein Antriebssystem für ein Kraftfahrzeug. Ferner betrifft die Erfindung eine Elektromaschine mit einem gattungsgemäßen Rotor sowie ein Kraftfahrzeug mit einer gattungsgemäßen Elektromaschine.

Es sind Rotoren für Elektromaschinen bekannt, die ein Lamellenpaket aus einer Vielzahl von Rotorlamellen aufweisen. Die Rotorlamellen sind als Blechscheiben mit einer zentralen Durchführung zur Aufnahme einer Rotorwelle des Rotors ausgebildet. Ferner weisen die Rotorlamellen mehrere Funktionsdurchführungen auf, durch welche im Lamellenpaket durch eine fluchtende Anordnung Funktionsfreimachungen gebildet sind. Derartige Funktionsfreimachungen sind beispielsweise als Magnettaschen zur Aufnahme von Permanentmagneten, als Kühlmittelkanäle zum Durchleiten eines Kühlmittels oder als magnetische Rückschlüsse zum Verbessern des magnetischen Flusses der Permanentmagnete ausgebildet.

Zur Verbesserung der Betriebseigenschaften des Rotors sowie zur leichteren Herstellung ist es vorteilhaft, wenn das Lamellenpaket in mehrere Lamellenteilpakete unterteilt ist, welche jeweils aus einer Mehrzahl von Rotorlamellen zusammengesetzt sind. Da ein Verkleben der Rotorlamellen der einzelnen Lamellenteilpakete, beispielsweise mittels Backlack oder Punktklebeverfahren, sehr aufwendig und kostenintensiv ist, hat es sich als vorteilhaft gezeigt, wie beispielsweise in dem Dokument DE 10 2019 214 513 A1 beschrieben, die Rotorlamellen durch Stanzpaketieren zu einem Lamellenteilpaket miteinander zu verbinden.

Beim Stanzpaketieren werden die Rotorlamellen zunächst zu einem Lamellenstapel zusammengefasst und in axialer Richtung zusammengedrückt, damit zwischen benachbarten Rotorlamellen kein Spalt entsteht. Aus Gründen der Vergießbarkeit und Dichtigkeit, beispielsweise für durchströmende Kühlmittel, sowie eines erzielbaren Stapelfaktors ist ein möglichst spaltfreies Aufstapeln der Rotorlamellen zu dem Lamellenstapel vorteilhaft.

Über einen oder mehrere punktuell auf eine erste Stirnseite einer äußeren ersten Rotorlamelle wirkende Stanzdorne wird zudem eine punktuelle Kraft auf den Lamellenstapel übertragen. Hierdurch wird Material der Rotorlamellen in die jeweils benachbarte Rotorlamelle verdrängt, sodass die Rotorlamellen miteinander zu dem Lamellenteilpaket verbunden werden. Auf der ersten Stirnseite entsteht hierbei eine erste Vertiefung. Bei einer der ersten Rotorlamelle am Lamellenteilpaket entgegengesetzt angeordneten stirnseitigen zweiten Rotorlamelle wird durch das Stanzpaketieren eine sich in axialer Richtung vom Lamellenteilpaket weg erstreckende zweite Erhebung erzeugt.

Das Lamellenpaket des Rotors wird aus mehreren Lamellenteilpaketen zusammengesetzt. Hierbei ist es aus Gründen der Vergießbarkeit und Dichtigkeit ebenfalls vorteilhaft, wenn die Lamellenteilpakete derart angeordnet werden, dass Spalte zwischen benachbarten Lamellenteilpaketen vermieden sind. Die Lamellenteilpakete sind beispielsweise derart zueinander anordenbar, dass die zweiten Erhebungen in den ersten Vertiefungen aufgenommen sind. Aufgrund fertigungstechnisch bedingter Toleranzen ist eine solche Anordnung nicht immer sicherstellbar.

Zur Erreichung einer Rotorschrägung ist es üblich, benachbarte Lamellenteilpakete vor dem Zusammenfügen zu dem Lamellenpaket um die Rotorlängsachse relativ zueinander um einen definierten Schrägungswinkel zu verdrehen. Die zweiten Erhebungen sind dann neben den ersten Vertiefungen angeordnet, sodass auch bei einem Verpressen der Anordnung der Lamellenteilpakete eine Spaltfreiheit zwischen den Lamellenpaketen nicht prozesssicher gewährleistbar ist. Ein Lamellenpaket mit Rotorschrägung ist beispielsweise aus dem Dokument DE 10 2021 103 679 A1 bekannt.

Bekannte Rotoren und Verfahren zur Herstellung von Rotoren für Elektromaschinen, insbesondere für Kraftfahrzeuge, haben den Nachteil, dass die Kosten zur Herstellung eines Rotors mit spaltfreiem Lamellenpaket oftmals verhältnismäßig hoch sind und bei günstigeren Herstellungsverfahren die Spaltfreiheit nicht sicher gewährleistet ist.

Es ist daher Aufgabe der vorliegenden Erfindung, die voranstehend beschriebenen Nachteile bei einem Rotor für eine Elektromaschine für ein Antriebssystem für ein Kraftfahrzeug zu beheben oder zumindest teilweise zu beheben. Insbesondere ist es Aufgabe der vorliegenden Erfindung einen Rotor, eine Elektromaschine und ein Kraftfahrzeug zu schaffen, die auf eine einfache und kostengünstige Art und Weise Spalte zwischen benachbarten, aus Rotorlamellen durch Stanzpaketieren hergestellten Lamellenteilpaketen vermeiden.

Die voranstehende Aufgabe wird durch die Patentansprüche gelöst. Demnach wird die Aufgabe durch einen Rotor für eine Elektromaschine für ein Antriebssystem für ein Kraftfahrzeug mit den Merkmalen des unabhängigen Anspruchs 1, durch eine Elektromaschine für ein Antriebssystem für ein Kraftfahrzeug mit den Merkmalen des nebengeordneten Anspruchs 9 sowie durch ein Kraftfahrzeug mit einem Antriebssystem mit den Merkmalen des nebengeordneten Anspruchs 10 gelöst. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Rotor beschrieben sind, selbstverständlich auch im Zusammenhang mit der erfindungsgemäßen Elektromaschine sowie dem erfindungsgemäßen Kraftfahrzeug und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe durch einen Rotor für eine Elektromaschine für ein Antriebssystem für ein Kraftfahrzeug gelöst. Der Rotor weist eine sich um eine Rotorlängsachse erstreckende Rotorwelle und ein auf der Rotorwelle angeordnetes Lamellenpaket aus einer Mehrzahl von Lamellenteilpaketen auf. Jedes Lamellenteilpaket weist mehrere Funktionsdurchführungen auf. Jedes Lamellenteilpaket weist zudem eine durch eine erste Rotorlamelle gebildete Stirnseite und eine durch eine zweite Rotorlamelle gebildete der Stirnseite der ersten Rotorlamelle entgegengesetzte Stirnseite auf, wobei die Lamellenteilpakete zwischen der ersten Rotorlamelle und der zweiten Rotorlamelle eine Mehrzahl von mittleren Rotorlamellen aufweisen. Bei den Lamellenteilpaketen sind die erste Rotorlamelle, die mittleren Rotorlamellen und die zweite Rotorlamelle über Stanzpaketieren miteinander verbunden, wobei die Stirnseiten der zweiten Rotorlamellen jeweils eine durch die Stanzpaketierung bedingte, sich in axialer Richtung erstreckende Erhebung aufweisen. Erfindungsgemäß ist in der Stirnseite der ersten Rotorlamelle und/oder der Stirnseite der zweiten Rotorlamelle ein Aufnahmebereich ausgebildet, wobei die Erhebung eines direkt benachbarten Lamellenteilpakets vollständig in dem Aufnahmebereich angeordnet ist.

Zum Lagern des Rotors an einer Elektromaschine, beispielsweise an einem Maschinengehäuse oder am Stator, sowie zur Drehmomentübertragung weist der Rotor die Rotorwelle auf, die sich entlang der Rotorlängsachse erstreckt. Die Rotorlängsachse kann auch als Rotationsachse des Rotors bezeichnet werden. Die Rotorwelle kann erfindungsgemäß gemäß einer gewöhnlichen Rotorwelle, beispielsweise aus Stahl, mit Absätzen, Freistichen, Lagersitzen, Fasen, Längsrillen oder dergleichen, hergestellt sein.

Das Lamellenpaket ist vorzugsweise in radialer Richtung drehfest und in axialer Richtung verschiebungssicher auf der Rotorwelle angeordnet, vorzugsweise durch ein thermisches Fügeverfahren unter Ausnutzung von Wärmeausdehnungseffekten der Rotorwelle und des Lamellenpakets. Die Rotorwelle kann beispielsweise durch Einschrumpfen in eine zentrale Durchführung des Lamellenpakets eingeführt sein. Hierfür wird die Rotorwelle gekühlt und/oder das Lamellenpaket erwärmt, sodass ein Zusammenfügen leicht möglich ist. Durch Temperaturangleichung an eine Umgebungstemperatur ist somit ein fester Sitz des Lamellenpakets auf der Rotorwelle herstellbar. Vorzugsweise ist das Lamellenpaket derart auf der Rotorwelle angeordnet, dass eine Relativbewegung zwischen dem Lamellenpaket und der Rotorwelle, beispielsweise kraftschlüssig und/oder formschlüssig, verhindert ist.

Das Lamellenpaket ist aus mindestens zwei Lamellenteilpaketen zusammengesetzt. Erfindungsgemäß können auch drei, vier, sechs oder mehr Lamellenteilpakete vorgesehen sein. An einer oder beiden Endseiten des Lamellenpakets können erfindungsgemäß zusätzlich jeweils mindestens eine Wuchtscheibe angeordnet sein. Die Lamellenteilpakete können beispielsweise derartig hintereinander angeordnet sein, dass eine erste Rotorlamelle eines Lamellenteilpakets einer zweiten Rotorlamelle eines benachbarten Lamellenteilpakets zugewandt ist.

Jedes Lamellenteilpaket weist eine Mehrzahl von Funktionsdurchführungen auf. Unter einer Funktionsdurchführung wird im Rahmen der Erfindung eine Durchführung verstanden, welche zur Erfüllung einer technischen Funktion, wie beispielsweise der Aufnahme, Durchleitung oder Beeinflussung eines Stoffes, Feldes oder dergleichen, ausgebildet ist. Die Funktionsdurchführungen sind vorzugsweise regelmäßig, gleichmäßig, beispielsweise symmetrisch, über die Rotorlamellen verteilt. Vorzugsweise sind die Funktionsdurchführungen der Rotorlamellen innerhalb der Lamellenteilpakete fluchtend zueinander ausgebildet und bilden somit einen gemeinsamen Funktionskanal.

Die Lamellenpakete weisen jeweils die Mehrzahl von mittleren Rotorlamellen auf, die zwischen der stirnseitigen ersten Rotorlamelle und der stirnseitigen zweiten Rotorlamelle angeordnet sind. Die erste Rotorlamelle, zweite Rotorlamelle und mittleren Rotorlamellen sind allesamt koaxial zur Rotorlängsachse angeordnet und vorzugsweise spaltfrei durch Stanzpaketieren miteinander verbunden. Es kann erfindungsgemäß vorgesehen sein, dass der Rotor zusätzliche Wuchtscheiben an den Stirnseiten des Lamellenpakets aufweist. Alternativ können auch die erste Rotorlamelle und/oder die zweite Rotorlamelle als Wuchtscheibe ausgebildet sein.

Die Stanzpaketierung ist vorzugsweise über mehrere punktuelle Krafteinleitungen hergestellt, sodass benachbarte Rotorscheiben an mehreren Verbindungsstellen, beispielsweise acht, miteinander verbunden sind. Die Zahl der Verbindungsstellen kann sich beispielsweise aus der Anordnung der Funktionsdurchführungen ergeben. Vorzugsweise sind die Verbindungsstellen regelmäßig, gleichmäßig, insbesondere symmetrisch, über die Rotorlamelle verteilt angeordnet.

Durch das Stanzpaketieren weisen die Stirnseiten der zweiten Rotorlamellen jeweils die sich in axialer Richtung erstreckende Erhebung auf. Da eine Stanzpaketierung vorzugsweise über mehrere punktuelle Krafteinleitungen hergestellt ist, weisen die zweiten Rotorlamellen somit vorzugsweise so viele derartige Erhebungen wie Verbindungsstellen auf. Ebenso durch das Stanzpaketieren können die Stirnseiten der ersten Rotorlamellen jeweils sich in axialer Richtung erstreckende Vertiefungen aufweisen.

Der Aufnahmebereich ist in der Stirnseite der ersten Rotorlamelle und/oder der Stirnseite der zweiten Rotorlamelle angeordnet und ist zur vollständigen Aufnahme der Erhebung eines direkt benachbarten Lamellenteilpakets ausgebildet. Die Zahl der Aufnahmebereiche entspricht vorzugsweise der Zahl der Erhebungen. Alternativ kann die Zahl der Aufnahmebereiche auch größer als die Zahl der Erhebungen sein, beispielsweise um unterschiedliche Rotorschrägungen zu ermöglichen. Die Aufnahmebereiche sind vorzugsweise gleichmäßig, insbesondere symmetrisch, über die Rotorlamelle verteilt angeordnet. Vorzugsweise ist die Verteilung der Aufnahmebereiche deckungsgleich mit der Verteilung der Erhebungen. Die Aufnahmebereiche können erfindungsgemäß eine runde, ovale oder eckige Ausbildung aufweisen. Vorzugsweise ist der Aufnahmebereich in eine parallel zur Stirnseite verlaufende erste Erstreckungsrichtung, beispielsweise in Umfangsrichtung bzw. Tangentialrichtung des Rotors, größer ausgebildet als die Erhebung. Weiter bevorzugt ist der Aufnahmebereich in eine quer zur ersten Erstreckungsrichtung sowie parallel zur Stirnseite verlaufende zweite Erstreckungsrichtung, beispielsweise in radialer Richtung des Rotors, größer oder gleich der Erstreckung der Erhebung. Vorzugsweise sind die Aufnahmebereiche ausgebildet, eine Relativrotation, beispielsweise zwischen 1° - 5°, zwischen benachbarten Lamellenteilpaketen zuzulassen. Die Erhebungen eines Lamellenpakets sind in den Ausnehmungen des benachbarten Lamellenpakets angeordnet. Somit ist ein spaltfreies Anordnen benachbarter Lamellenteilpakete gewährleistet. Die Aufnahmebereiche sind vorzugsweise an Stellen der stirnseitigen Rotorlamelle angeordnet, an welchen durch den Aufnahmebereich eine möglichst geringe Störung eines magnetischen Flusses des Rotors bewirkt wird, wie beispielsweise in der Nähe von Längsseiten von als Magnettaschen ausgebildeten Funktionsdurchführungen des Rotors, vorzugsweise genau zwischen den magnetischen Polen.

Ein erfindungsgemäßer Rotor hat gegenüber herkömmlichen Rotoren den Vorteil, dass mit einfachen Mitteln sowie auf eine kostengünstige Art und Weise eine besonders leichte Montage der einzelnen Komponenten des Rotors, wie beispielsweise der Rotorlamellen, gewährleistet ist. Durch das Zusammenfassen der Rotorlamellen zu Lamellenteilpaketen sind besonders zuverlässige sowie kostengünstige Stanzpaketierungen gewährleistet. Durch die Aufnahmebereiche ist auf vorteilhafte Weise vermeidbar, dass Erhebungen auf benachbarte Stirnseiten drücken und somit einen Spalt bewirken, durch welchen Undichtigkeiten, beispielsweise bei Kühlfluidkanälen, entstehen können.

Gemäß einer bevorzugten Weiterentwicklung der Erfindung kann bei einem Rotor vorgesehen sein, dass die Funktionsdurchführungen als Magnettaschen zur Aufnahme von Permanentmagneten und/oder Kühlkanäle zur Durchführung eines Kühlfluids und/oder magnetische Rückschlüsse ausgebildet sind. Bei einem Permanentmagnete aufweisenden Rotor sind die Permanentmagnete üblicherweise in Magnettaschen angeordnet. Die Magnettaschen können gemäß herkömmlichen Magnettaschen ausgebildet sein. Vorzugsweise weisen die Magnettaschen in radialer Richtung eine geringere Erstreckung auf als in Umfangsrichtung bzw. Tangentialrichtung. Als Magnettaschen ausgebildete Funktionsdurchführungen erstrecken sich vorzugsweise zumindest vollständig durch ein Lamellenteilpaket in axialer Richtung und können in axialer Richtung durch ein benachbartes Lamellenteilpaket vollständig oder teilweise begrenzt sein. Ferner sind als Magnettaschen ausgebildete Funktionsdurchführungen vorzugsweise regelmäßig oder gleichmäßig bzw. symmetrisch verteilt. Als Kühlkanäle ausgebildete Funktionsdurchführungen erstrecken sich vorzugsweise vollständig durch das Lamellenpaket in axialer Richtung. Ferner sind als Kühlkanäle ausgebildete Funktionsdurchführungen vorzugsweise regelmäßig oder gleichmäßig bzw. symmetrisch verteilt. Als magnetische Rückschlüsse ausgebildete Funktionsdurchführungen sind vorzugsweise in Zwischenräumen zwischen Magnettaschen angeordnet. Als magnetische Rückschlüsse ausgebildete Funktionsdurchführungen erstrecken sich vorzugsweise zumindest vollständig durch ein Lamellenteilpaket in axialer Richtung und können in axialer Richtung durch ein benachbartes Lamellenteilpaket vollständig oder teilweise begrenzt sein. Ferner sind als magnetische Rückschlüsse ausgebildete Funktionsdurchführungen vorzugsweise regelmäßig oder gleichmäßig bzw. symmetrisch verteilt. Dies hat den Vorteil, dass mit einfachen Mitteln sowie auf eine kostengünstige Art und Weise technische Funktionen in den Rotor integriert sind.

Es ist erfindungsgemäß bevorzugt, dass der Aufnahmebereich zur Aufnahme der Erhebung eine Freimachung aufweist, wobei die Freimachung ein Sackloch oder ein durch eine mittlere Rotorlamelle in axialer Richtung begrenztes Durchgangsloch aufweist. Unter einer Freimachung wird ein Bereich der Rotorlamelle verstanden, in welchem die Rotorlamelle kein Material, wie beispielsweise Elektroblech oder dergleichen, aufweist. Die Freimachung kann beispielsweise durch Stanzen, Prägen, insbesondere Tiefprägen, Bohren, Fräsen oder dergleichen hergestellt sein. Die Freimachung weist vorzugsweise eine Form und Größe auf, die an die Form und Größe der Erhebung angepasst ist. Um die Eigenschaften des Lamellenpakets möglichst wenig zu beeinflussen, ist hierbei die räumliche Erstreckung der Freimachung unter Wahrung der beigemessenen technischen Funktion vorzugsweise möglichst gering ausgebildet. Die Freimachung ist vorzugsweise in axialer Richtung begrenzt ausgebildet. Eine solche Begrenzung ist bei einem Sackloch durch einen Boden des Sacklochs und bei einem Durchgangsloch durch eine Stirnfläche einer benachbarten Rotorlamelle bereitgestellt. Dies hat den Vorteil, dass mit einfachen Mitteln sowie auf eine kostengünstige Art und Weise das spaltfreie Anordnen benachbarter Lamellenteilpakete verbessert ist.

Weiter bevorzugt weist die Freimachung zur benachbarten mittleren Rotorlamelle hin eine Querschnittsverjüngung auf. Die Querschnittsverjüngung kann beispielsweise in einer, mehreren oder sämtlichen Seitenwandungen der Freimachung ausgebildet sein. Durch eine Querschnittsverjüngung ist ein gegenseitiges Zentrieren der Lamellenteilpakete beim Zusammenfügen bewirkbar. Ferner weist die Erhebung vorzugsweise, beispielsweise fertigungsbedingte, schräge Seitenflächen auf, wobei die Querschnittsverjüngung der Freimachung vorzugsweise an die schrägen Seitenflächen angepasst ist. Dies hat den Vorteil, dass mit einfachen Mitteln sowie auf eine kostengünstige Art und Weise das spaltfreie Anordnen benachbarter Lamellenteilpakete weiter verbessert ist.

In einer besonders bevorzugten Ausgestaltung der Erfindung kann bei einem Rotor vorgesehen sein, dass der Aufnahmebereich einen Deformationsbereich aufweist, wobei der Deformationsbereich ausgebildet ist, beim Zusammenfügen zweier Lamellenteilpakete die Erhebung durch Materialverdrängung des Deformationsbereichs aufzunehmen. Unter einem Deformationsbereich wird im Rahmen der Erfindung ein Bereich verstanden, welcher eine derart geringe Festigkeit aufweist, dass beim Verpressen der Lamellenteilpakete ein Verdrängen des Materials des Deformationsbereichs durch die Erhebung gewährleistet ist. Demnach ist es bevorzugt, dass die Erhebung eine höhere Festigkeit bzw. Härte als der Deformationsbereich aufweist. In diesem Rahmen kann erfindungsgemäß vorgesehen sein, dass die Erhebung eine geringere Festigkeit bzw. Härte als benachbarte mittlere Rotorlamellen aufweist. Beispielsweise kann der Deformationsbereich als lokale Aufweichung der stirnseitigen Rotorlamelle ausgebildet sein. Alternativ kann die komplette stirnseitige Lamelle weicher als mittlere Rotorlamellen und somit gänzlich als Deformationsbereich ausgebildet sein. Dies hat den Vorteil, dass mit einfachen Mitteln sowie auf eine kostengünstige Art und Weise das spaltfreie Anordnen benachbarter Lamellenteilpakete weiter verbessert ist.

Gemäß einer bevorzugten Ausführungsform der Erfindung sind benachbarte Lamellenteilpakete um die Rotorlängsachse relativ zueinander verdreht angeordnet. Eine derartige Verdrehung kann auch als Rotorschrägung bezeichnet werden und ist durch einen Rotorschrägungswinkel, welcher das Ausmaß der Verdrehung bezeichnet, spezifizierbar. Ein bevorzugter Rotorschrägungswinkel kann erfindungsgemäß beispielsweise zwischen 0,5° und 20°, vorzugsweise zwischen 1° und 10° betragen. Eine derartige Rotorschrägung ist vorzugsweise zwischen sämtlichen benachbarten Lamellenteilpaketen ausgebildet. Alternativ kann eine solche Rotorschrägung auch zwischen jedem zweiten Lamellenteilpaket ausgebildet sein, sodass eine Rotorschrägung jeweils zwischen zwei Paar Lamellenteilsegmenten gebildet ist. Kühlkanäle aufweisende Funktionsdurchführungen der Lamellenteilpakete sind vorzugsweise derart in den jeweiligen Rotorlamellen ausgebildet, dass diese bei benachbarten Lamellenteilpaketen durch die Rotorschrägung in einer Flucht angeordnet sind, um einen Kühlfluidstrom durch das Lamellenpaket zu verbessern. Die Verdrehung kann beispielsweise entlang der Rotorlängsachse zwischen den Lamellenteilpaketen jeweils in dieselbe Drehrichtung ausgebildet sein. Alternativ kann die Verdrehung zur Bildung einer V-Schrägung ausgebildet sein. Dies hat den Vorteil, dass mit einfachen Mitteln sowie auf eine kostengünstige Art und Weise elektromagnetische Eigenschaften des Rotors verbessert sind.

Vorzugsweise ist der Aufnahmebereich in der zweiten Rotorlamelle ausgebildet. Somit sind die Erhebungen und die Aufnahmebereiche jeweils auf derselben Stirnseite der zweiten Rotorlamellen angeordnet. Die Lamellenteilpakete sind dabei vorzugsweise abwechselnd um 180° um eine in radiale Richtung verlaufende Achse gedreht angeordnet, sodass jeweils zwei zweite Rotorlamellen benachbarter Lamellenteilpakete einander zugewandt sind. Diese Anordnung ist zudem derart ausgebildet, dass Erhebungen eines ersten Lamellenteilpakets in Aufnahmen eines zweiten Lamellenteilpakets und Erhebungen des zweiten Lamellenteilpakets in Aufnahmen des ersten Lamellenteilpakets angeordnet sind. Somit ist eine spaltfreie Anordnung der Lamellenteilpakete gewährleistet. Ferner ist es in diesem Zusammenhang bevorzugt, dass jeweils zwei erste Rotorlamellen benachbarter Lamellenteilpakete einander zugewandt sind. Vorzugsweise weisen in diesem Fall die ersten Rotorlamellen keine Erhebungen und weiter bevorzugt auch keine Aufnahmen auf, sodass eine spaltfreie Anordnung der Lamellenteilpakete gewährleistet ist. Dies hat den Vorteil, dass mit einfachen Mitteln sowie auf eine kostengünstige Art und Weise elektromagnetische Eigenschaften des Rotors weiter verbessert sind.

Besonders bevorzugt sind die Lamellenteilpakete kraftschlüssig auf der Rotorwelle gehalten. Das Lamellenpaket ist beispielsweise durch Aufschrumpfen auf der Rotorwelle angeordnet, beispielsweise durch Kühlen der Rotorwelle und/oder Erwärmen des Lamellenpakets sowie anschließendem Temperaturausgleich. Hierdurch ist ein axiales Bewegen des Lamellenpakets verhindert. Auch ein relatives Bewegen der Lamellenteilpakete zueinander bzw. zur Rotorwelle, wie beispielsweise Verdrehen um die Rotorlängsachse, Abkippen um eine in radiale Richtung verlaufende Achse, Verschieben in axiale Richtung oder dergleichen, ist somit verhindert. Vorzugsweise ist das Lamellenpaket zusätzlich in eine Vergussmasse eingegossen. Dies hat den Vorteil, dass mit einfachen Mitteln sowie auf eine kostengünstige Art und Weise eine Betriebssicherheit des Rotors verbessert ist.

Gemäß einem zweiten Aspekt der Erfindung wird die Aufgabe durch eine Elektromaschine für ein Antriebssystem für ein Kraftfahrzeug gelöst. Die Elektromaschine weist einen sich um eine Rotorlängsachse erstreckenden Stator mit einer Statorwicklung auf. Erfindungsgemäß weist die Elektromaschine einen erfindungsgemäßen Rotor auf. Der Stator weist vorzugsweise eine Statorwicklung aus Wicklungsdraht auf. Die Statorwicklung kann beispielsweise als klassische Umwicklung von Statorzähnen mit Wicklungsdraht, als Hairpin-Wicklung oder dergleichen ausgebildet sein. Die Elektromaschine ist vorzugsweise in einem Motorbetriebsmodus zum Antreiben des Kraftfahrzeugs sowie in einem Generatorbetriebsmodus zum Umwandeln kinetischer Energie in elektrische Energie, beispielsweise beim Rekuperieren zum Bremsen des Kraftfahrzeugs, betreibbar.

Bei der erfindungsgemäßen Elektromaschine ergeben sich sämtliche Vorteile, die bereits zu einem Rotor gemäß dem ersten Aspekt der Erfindung beschrieben worden sind. Demnach hat die erfindungsgemäße Elektromaschine gegenüber herkömmlichen Elektromaschinen den Vorteil, dass mit einfachen Mitteln sowie auf eine kostengünstige Art und Weise eine besonders leichte Montage der einzelnen Komponenten des Rotors, wie beispielsweise der Rotorlamellen, der Elektromaschine gewährleistet ist. Durch das Zusammenfassen der Rotorlamellen zu Lamellenteilpaketen sind besonders zuverlässige sowie kostengünstige Stanzpaketierungen gewährleistet. Durch die Aufnahmebereiche ist auf vorteilhafte Weise vermeidbar, dass Erhebungen auf benachbarte Stirnseiten drücken und somit einen Spalt bewirken, durch welchen Undichtigkeiten, beispielsweise bei Kühlfluidkanälen, entstehen können.

Gemäß einem dritten Aspekt der Erfindung wird die Aufgabe durch ein Kraftfahrzeug gelöst. Das Kraftfahrzeug weist ein Antriebssystem auf. Erfindungsgemäß weist das Antriebssystem zum Antreiben des Kraftfahrzeugs eine erfindungsgemäße Elektromaschine auf. Erfindungsgemäß kann das Antriebssystem auch mehrere erfindungsgemäße Elektromaschinen aufweisen. Vorzugsweise ist das Antriebssystem zum Rekuperieren mit der Elektromaschine ausgebildet. Das Antriebssystem kann beispielsweise als elektrisches Antriebssystem, hybrides Antriebssystem oder dergleichen ausgebildet sein. Vorzugsweise weist das Antriebssystem eine Traktionsbatterie zum Betreiben der Elektromaschine zum Antreiben des Kraftfahrzeugs auf. Es kann erfindungsgemäß vorgesehen sein, dass das Antriebssystem eine Brennstoffzelle zum Umwandeln von chemischer Energie, beispielsweise aus Wasserstoff, in elektrische Energie aufweist. Vorzugsweise weist das Antriebssystem zusätzlich einen fluiddichten Gastank, wie beispielsweise einen Wasserstofftank, auf.

Bei dem erfindungsgemäßen Kraftfahrzeug ergeben sich sämtliche Vorteile, die bereits zu einem Rotor gemäß dem ersten Aspekt der Erfindung sowie zu einer Elektromaschine gemäß dem zweiten Aspekt der Erfindung beschrieben worden sind. Demnach hat das erfindungsgemäße Kraftfahrzeug gegenüber herkömmlichen Kraftfahrzeugen den Vorteil, dass mit einfachen Mitteln sowie auf eine kostengünstige Art und Weise eine besonders leichte Montage der einzelnen Komponenten des Rotors, wie beispielsweise der Rotorlamellen, der Elektromaschine des Kraftfahrzeugs gewährleistet ist. Durch das Zusammenfassen der Rotorlamellen zu Lamellenteilpaketen sind besonders zuverlässige sowie kostengünstige Stanzpaketierungen gewährleistet. Durch die Aufnahmebereiche ist auf vorteilhafte Weise vermeidbar, dass Erhebungen auf benachbarte Stirnseiten drücken und somit einen Spalt bewirken, durch welchen Undichtigkeiten, beispielsweise bei Kühlfluidkanälen, entstehen können.

Ein erfindungsgemäßer Rotor, eine erfindungsgemäße Elektromaschine sowie ein erfindungsgemäßes Kraftfahrzeug werden nachfolgend anhand von Zeichnungen näher erläutert. Es zeigen jeweils schematisch:
- Figur 1: in einer perspektivischen Ansicht ein Lamellenpaket gemäß einer bevorzugten ersten Ausführungsform der Erfindung,
- Figur 2: in einer Draufsicht eine zweite Rotorlamelle eines Lamellenpakets gemäß einer bevorzugten zweiten Ausführungsform der Erfindung,
- Figur 3: in einer Seitenansicht eine Elektromaschine gemäß einer bevorzugten Ausführungsform der Erfindung, und
- Figur 4: in einer Seitenansicht eine bevorzugte Ausführungsform eines erfindungsgemäßen Kraftfahrzeugs.

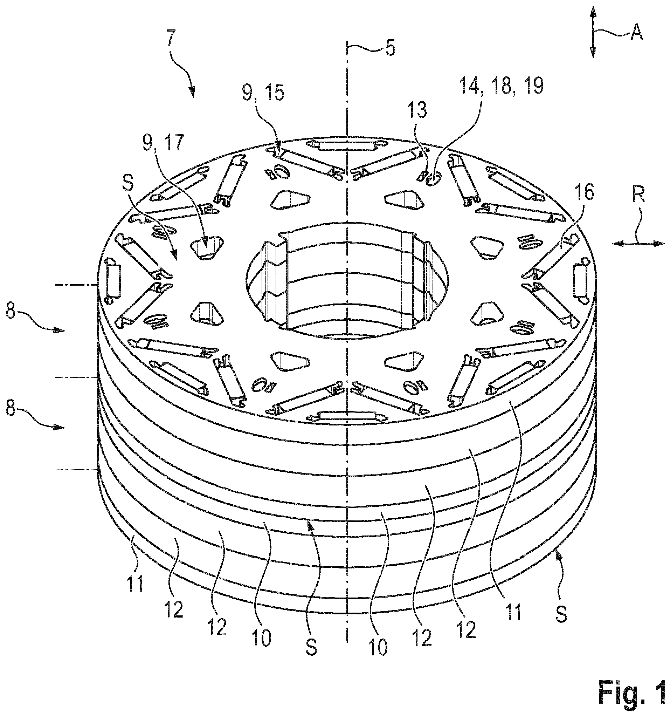

Elemente mit gleicher Funktion und Wirkungsweise sind in den Figuren 1 bis 4 jeweils mit denselben Bezugszeichen versehen.

In Fig. 1 ist ein Lamellenpaket 7 gemäß einer bevorzugten Ausführungsform der Erfindung schematisch in einer perspektivischen Ansicht abgebildet. Das Lamellenpaket 7 weist mehrere koaxial zu einer Rotorlängsachse 5 angeordnete Lamellenteilpakete 8 auf. Die Lamellenteilpakete 8 weisen jeweils mehrere mittlere Rotorlamellen 12 auf, die zwischen einer ersten Rotorlamelle 10 und einer zweiten Rotorlamelle 11 angeordnet und durch Stanzpaketieren miteinander verbunden sind. In dieser Ansicht ist eine Stirnseite S einer oberen zweiten Rotorlamelle 11 besonders gut erkennbar. In einem mittleren Bereich des Lamellenpakets 7 sind zwei Stirnseiten S zweier erster Rotorlamellen 10 einander gegenüberliegend sowie spaltfrei angeordnet. Ferner sind die Lamellenteilpakete 8 um einen definierten Schrägungswinkel um die Rotorlängsachse 5 zueinander verdreht.

Die zweite Rotorlamelle 11 weist mehrere Funktionsdurchführungen 9 auf, welche sich ebenfalls durch die mittleren Rotorlamellen 12 sowie die erste Rotorlamelle 10 hindurch erstrecken. Der Rotorlängsachse 5 benachbart angeordnete Funktionsdurchführungen 9 sind als Kühlkanäle 17 zum Durchleiten eines Kühlfluids ausgebildet. In radialer Richtung R weiter außen angeordnete Funktionsdurchführungen 9 sind als Magnettaschen 15 ausgebildet, in welchen Permanentmagnete 16 angeordnet sind.

Durch das Stanzpaketieren weist die zweite Rotorlamelle 11 mehrere über die Stirnseite S auf einer Kreisbahn verteilte Erhebungen 13 auf. Neben den Erhebungen 13 ist jeweils ein Aufnahmebereich 14 auf derselben Kreisbahn angeordnet. Der Aufnahmebereich 14 weist in diesem Ausführungsbeispiel eine als Sackloch ausgebildete Freimachung 18 zur Aufnahme einer Erhebung 13 eines in dieser Ansicht von oben auf das Lamellenteilpaket 8 aufsetzbares weiteres Lamellenteilpakets 8 auf. Das Sackloch ist in axialer Richtung A durch einen optionalen Deformationsbereich 19 des Aufnahmebereichs 14 begrenzt. Beim Zusammenfügen der Lamellenteilpakete 8 ist ein Spitzenabschnitt der Erhebung 13 des nicht dargestellten Lamellenteilpakets 8 durch Materialverformung des Deformationsbereichs 19 in den Deformationsbereich 19 aufnehmbar. Die Erhebungen 13, Aufnahmebereiche 14 sowie Funktionsdurchführungen 9, insbesondere die als Magnettaschen 15 ausgebildeten Funktionsdurchführungen 9, sind überdies vorzugsweise derart angeordnet, dass hierbei eine Rotorschrägung bereitgestellt ist.

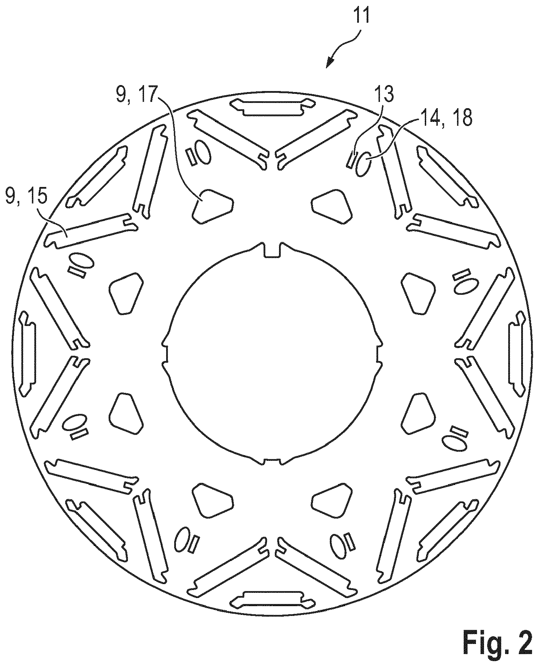

Fig. 2 zeigt eine zweite Rotorlamelle 11 eines Lamellenpakets 7 gemäß der bevorzugten zweiten Ausführungsform der Erfindung schematisch in einer Draufsicht. Bei der zweiten Rotorlamelle 11 gemäß der zweiten Ausführungsform der Erfindung weisen die Aufnahmebereiche 14 jeweils ein als Freimachung 18 ausgebildetes Durchgangsloch auf.

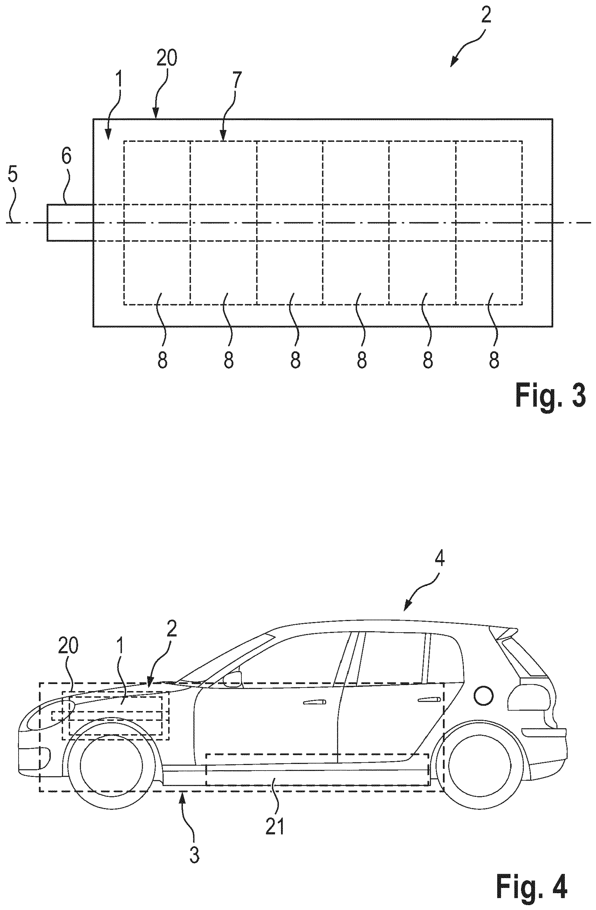

In Fig. 3 ist eine Elektromaschine 2 gemäß einer bevorzugten Ausführungsform der Erfindung schematisch in einer Seitenansicht dargestellt. Die Elektromaschine 2 weist einen um eine Rotorlängsachse 5 rotierbar gelagerten, erfindungsgemäßen Rotor 1 mit einer Rotorwelle 6 und einem auf der Rotorwelle 6 angeordneten Lamellenpaket 7 aus sechs Lamellenteilpaketen 8 auf. Der Rotor 1 ist von einem Stator 20 der Elektromaschine 2 umgeben.

Fig. 4 zeigt eine bevorzugte Ausführungsform eines erfindungsgemäßen Kraftfahrzeugs 4 schematisch in einer Seitenansicht. Das Kraftfahrzeug 4 weist ein elektrisches Antriebssystem 3 mit einer erfindungsgemäßen Elektromaschine 2 zum Antreiben des Kraftfahrzeugs 4 sowie zum Rekuperieren und einer Traktionsbatterie 21 zum Speichern elektrischer Energie sowie zum Versorgen der Elektromaschine 2 mit elektrischer Energie auf. Die Elektromaschine 2 weist einen Stator 20 auf, in welchem ein erfindungsgemäßer Rotor 1 drehbar gelagert ist.

### Bezugszeichenliste

- 1: Rotor
- 2: Elektromaschine
- 3: Antriebssystem
- 4: Kraftfahrzeug
- 5: Rotorlängsachse
- 6: Rotorwelle
- 7: Lamellenpaket
- 8: Lamellenteilpaket
- 9: Funktionsdurchführung
- 10: erste Rotorlamelle
- 11: zweite Rotorlamelle
- 12: mittlere Rotorlamelle
- 13: Erhebung
- 14: Aufnahmebereich
- 15: Magnettasche
- 16: Permanentmagnet
- 17: Kühlkanal
- 18: Freimachung
- 19: Deformationsbereich
- 20: Stator
- 21: Traktionsbatterie

- A: axiale Richtung
- R: radiale Richtung
- S: Stirnseite

## Patentansprüche

1. Rotor (1) für eine Elektromaschine (2) für ein Antriebssystem (3) für ein Kraftfahrzeug (4), aufweisend eine sich um eine Rotorlängsachse (5) erstreckende Rotorwelle (6) und ein auf der Rotorwelle (6) angeordnetes Lamellenpaket (7) aus einer Mehrzahl von Lamellenteilpaketen (8), wobei jedes Lamellenteilpaket (8) mehrere Funktionsdurchführungen (9) aufweist, wobei jedes Lamellenteilpaket (8) eine durch eine erste Rotorlamelle (10) gebildete Stirnseite (S) und eine durch eine zweite Rotorlamelle (11) gebildete der Stirnseite (S) der ersten Rotorlamelle (10) entgegengesetzte Stirnseite (S) aufweist, wobei die Lamellenteilpakete (8) zwischen der ersten Rotorlamelle (10) und der zweiten Rotorlamelle (11) eine Mehrzahl von mittleren Rotorlamellen (12) aufweisen, wobei bei den Lamellenteilpaketen (8) die erste Rotorlamelle (10), die mittleren Rotorlamellen (12) und die zweite Rotorlamelle (11) über Stanzpaketieren miteinander verbunden sind, wobei die Stirnseiten (S) der zweiten Rotorlamellen (11) jeweils eine durch die Stanzpaketierung bedingte, sich in axialer Richtung (A) erstreckende Erhebung (13) aufweisen,
**dadurch gekennzeichnet,**
**dass** in der Stirnseite (S) der ersten Rotorlamelle (10) und/oder der Stirnseite (S) der zweiten Rotorlamelle (11) ein Aufnahmebereich (14) ausgebildet ist, wobei die Erhebung (13) eines direkt benachbarten Lamellenteilpakets (8) vollständig in dem Aufnahmebereich (14) angeordnet ist.

2. Rotor (1) nach Anspruch 1,
**dadurch gekennzeichnet,**
**dass** die Funktionsdurchführungen (9) als Magnettaschen (15) zur Aufnahme von Permanentmagneten (16) und/oder Kühlkanäle (17) zur Durchführung eines Kühlfluids und/oder magnetische Rückschlüsse ausgebildet sind.

3. Rotor (1) nach Anspruch 1 oder 2,
**dadurch gekennzeichnet,**
**dass** der Aufnahmebereich (14) zur Aufnahme der Erhebung (13) eine Freimachung (18) aufweist, wobei die Freimachung (18) ein Sackloch oder ein durch eine mittlere Rotorlamelle (12) in axialer Richtung (A) begrenztes Durchgangsloch aufweist.

4. Rotor (1) nach Anspruch 3,
**dadurch gekennzeichnet,**
**dass** die Freimachung (18) zur benachbarten mittleren Rotorlamelle (12) hin eine Querschnittsverjüngung aufweist.

5. Rotor (1) nach einem der vorangegangenen Ansprüche,
**dadurch gekennzeichnet,**
**dass** der Aufnahmebereich (14) einen Deformationsbereich (19) aufweist, wobei der Deformationsbereich (19) ausgebildet ist, beim Zusammenfügen zweier Lamellenteilpakete (8) die Erhebung (13) durch Materialverdrängung des Deformationsbereichs (19) aufzunehmen.

6. Rotor (1) nach einem der vorangegangenen Ansprüche,
**dadurch gekennzeichnet,**
**dass** benachbarte Lamellenteilpakete (8) um die Rotorlängsachse (5) relativ zueinander verdreht angeordnet sind.

7. Rotor (1) nach einem der vorangegangenen Ansprüche,
**dadurch gekennzeichnet,**
**dass** der Aufnahmebereich (14) in der zweiten Rotorlamelle (11) ausgebildet ist.

8. Rotor (1) nach einem der vorangegangenen Ansprüche,
**dadurch gekennzeichnet,**
**dass** die Lamellenteilpakete (8) kraftschlüssig auf der Rotorwelle (6) gehalten sind.

9. Elektromaschine (2) für ein Antriebssystem (3) für ein Kraftfahrzeug (4), aufweisend einen sich um eine Rotorlängsachse (5) erstreckenden Stator (20) mit einer Statorwicklung,
**dadurch gekennzeichnet,**
**dass** die Elektromaschine (2) einen Rotor (1) nach einem der vorangegangenen Ansprüche aufweist.

10. Kraftfahrzeug (4), aufweisend ein Antriebssystem (3),
**dadurch gekennzeichnet,**
**dass** das Antriebssystem (3) zum Antreiben des Kraftfahrzeugs (4) eine Elektromaschine (2) nach Anspruch 9 aufweist.
